# EUROPÄISCHE PATENTSCHRIFT

(11) **EP 0 631 831 B1**
(45) Veröffentlichungstag und Bekanntmachung des Hinweises auf die Patenterteilung: **15.04.1998**
(21) Anmeldenummer: 94109464.1
(22) Anmeldetag: 20.06.1994
(51) Int. Cl.: B21K 1/60, F16B 19/00

(54) **Verfahren zur Herstellung einer Stauchhülse und nach dem Verfahren hergestellte Stauchhülse**
Method for manufacture of an expansible hollow rivet
Procédé pour la fabrication d'un corps refoulé et corps refoulé produit d'après ce procédé

(30) Priorität: 25.06.1993 DE 4321174
(43) Veröffentlichungstag der Anmeldung: 04.01.1995
(73) Patentinhaber: Schruff, Herbert, D-54293 Trier (DE)
(72) Erfinder: Schruff, Herbert, D-54293 Trier (DE)
(74) Vertreter: Serwe, Karl-Heinz, Dipl.-Ing.

(56) Entgegenhaltungen:
- EP-A- 0 333 138
- GB-A- 931 839
- US-A- 4 810 141

## Beschreibung

Die Erfindung betrifft ein Verfahren zur Herstellung einer Stauchhülse mit einem oberen Kopf, einem mittleren, geschlitzten Stauchteil und einem unteren halteteil.

Eine derartige Stauchhülse ist aus der EP-A-0333 138 bekannt. Diese Stauchhülsen finden Verwendung als Blindnietmuttern oder Blindnietschrauben. Die Herstellung des geschlitzten, mittleren Stauchteiles der Stauchhülsen ist jedoch bislang mit hohen Kosten verbunden. Nachteilig ist weiterhin, daß die bisher bekannten Blindnietmuttern oder Blindnietschrauben rund sind, so daß sie sich leicht bei der Befestigung mitdrehen. Die Herstellung von quadratischen oder rechteckigen Querschnitten ist jedoch mit hohen Kosten verbunden.

Die Aufgabe der Erfindung besteht darin, ein Verfahren der eingangs genannten Art vorzuschlagen, mit dem schnell und kostengünstig derartige Stauchhülsen herstellbar sind, die in ihrem Halteteil unrund sind.

Diese Aufgabe wird dadurch gelöst, daß in einen Rohling mit einen Kopf und einen sich daran anschließenden Schaft von unten eine zentrale Ausnehmung kürzerer Länge als der Schaft fließgepreßt wird, daß dann durch weiteres Aufpressen der zentralen Ausnehmung in die Schaftaußenseite in Schaftlängsrichtung im Abstand zueinander verlaufende, sich über die Länge des Schaftes erstreckende nutartige Rillen fließgepreßt werden und daß anschließend in den so verformten Rohrling vom Kopf bis zum unteren Halteteil eine Ausnehmung in einem die nutartigen Rillen im Stauchteil frei schneidenden Durchmesser eingebracht wird.

Bei einem weiteren vorteilhaften Verfahren erfolgt das Einbringen der zentralen Ausnehmung und das Aufpressen mit dem Fließpressen der nutartigen Rillen in einem Arbeitsschritt.

Vorzugsweise wird der Schaft des Rohlings etwa in einen rechteckigen, quadratischen oder dreieckigen Querschnitt fließgepreßt.

Vorteilhaft wird in den unteren Halteteil ein Innengewinde eingebracht. Bei einer weiteren Ausführungsform wird in dem unteren Halteteil der Schaft einer den Kopf nach oben überragenden Schraube in bekannter Weise befestigt.

Nach einem weiteren vorteilhaften Verfahren hat das untere Halteteil einen Außendurchmesser, der kleiner als der durch den Nutboden der Rillen bestimmte Durchmesser ist.

Die Erfindung ist in den Zeichnungen beispielhaft dargestellt. Es zeigen:
- Fig. 1: einen vorverformten Rohling in Seitenansicht,
- Fig. 2: den Rohling im Querschnitt nach A-A der Fig. 1,
- Fig. 3: einen vorverformten Rohling in Seitenansicht mit dreieckigem Querschnitt,
- Fig. 4: den Rohling im Querschnitt nach A-A der Fig. 3,
- Fig. 5: den Rohling nach Einbringen der die nutartigen Rillen freischneidenden Ausnehmung im Längsschnitt,
- Fig. 6: den Rohling im Querschnitt noch B-B der Fig. 5,
- Fig. 7: eine Blindnietmutter im Längsschnitt,
- Fig. 8: eine Blindnietschraube im Längsschnitt,
- Fig. 9: einen Rohling mit Halteteil mit kleinerem Außendurchmesser und
- Fig. 10: den Rohling im Schnitt nach C-C der Fig. 9.

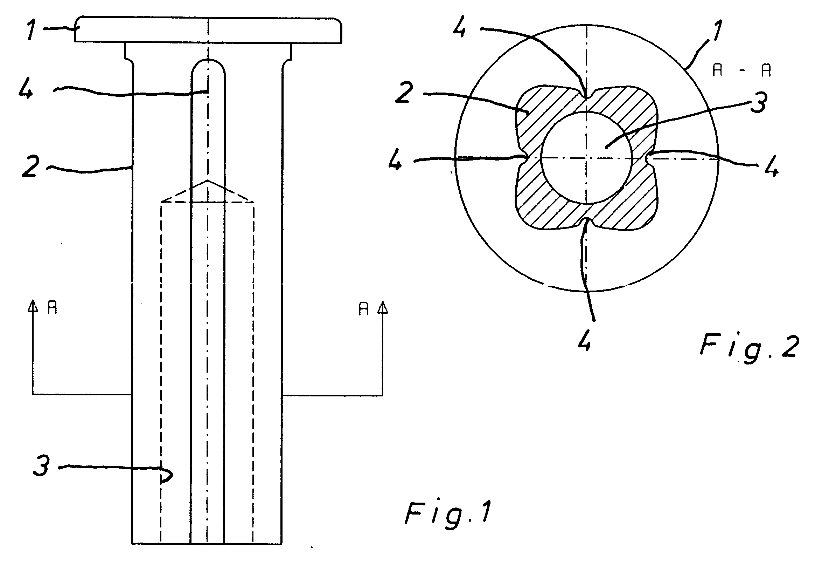

Nach den Fig. 1 und 2 hat ein Rohling zur Herstellung einer Stauchhülse einen oberen Kopf 1 und einen daran anschließenden Schaft 2.

Wie die Fig. 1 und 2 weiter zeigen, wurde in den Schaft 2 von unten eine zentrale Ausnehmung 3 in einer geeigneten Preßform fließgepreßt, so daß der Schaft 2 etwa quadratischen Querschnitt hat. Die Fig. 1 und 2 zeigen weiter, daß in die Schaftaußenseite vier in Schaftlängsrichtung im Abstand zueinander verlaufende, sich über die Länge des Schaftes 2 erstreckende nutartige Rillen 4 fließgepreßt sind, die in der Mitte der vier Seiten des quadratischen Querschnittes des Schaftes 2 verlaufen. Diese Rillen verlaufen auch im unteren Halteteil 6, so daß dieses Halteteil zwangsweise unrund wird.

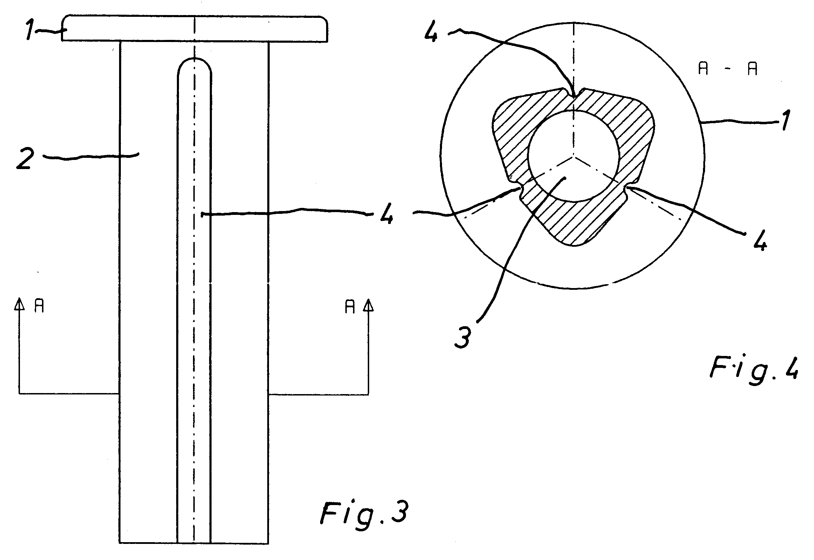

Die Fig. 3 und 4 zeigen einen Rohling, der in der oben beschriebenen Weise in einen dreieckigen Querschnitt fließgepreßt wurde.

Wie die Fig. 1 bis 4 zeigen, verlaufen die nutartigen Rillen 4 auch im unteren Halteteil 6, so daß durch diese Rillen auch ein runder Schaft unrund wird. Dadurch wird bei der Verwendung der erfindungsgemäßen Stauchhülse ein Mitdrehen der Stauchhülse verhindert, wobei darüber hinaus ein rechteckiger, quadratischer oder dreieckiger fließgepreßter Querschnitt das Mitdrehen sicher verhindert.

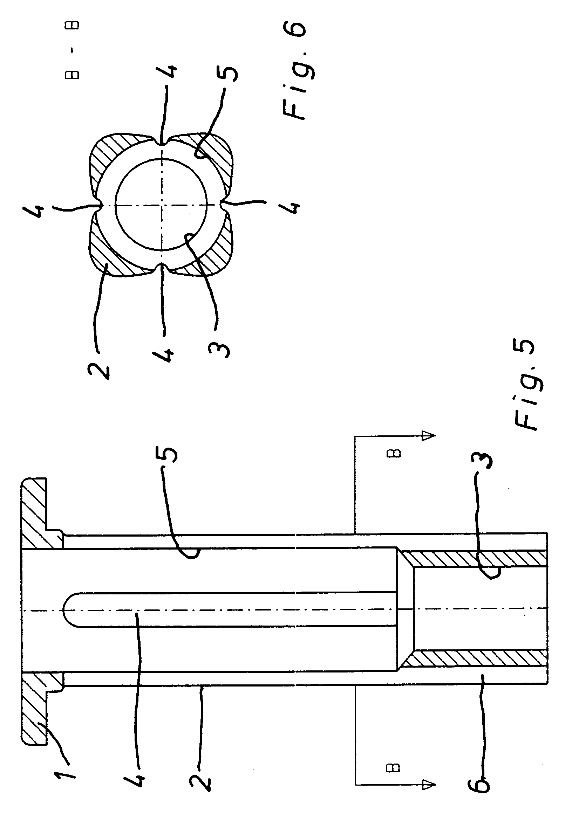

Die Fig. 5 und 6 zeigen weiter, daß in den Rohling vom Kopf 1 her eine Ausnehmung 5 eingebracht wurde, vorzugsweise durch Aufbohren, die die Nutböden der nutartigen Rillen 4 freigeschnitten hat. Wie die Fig. 5 zeigt, wird die Ausnehmung 5 nur bis zum unteren Halteteil 6 eingebracht, so daß nur der mittlere Teil des Rohlings geschlitzt ist.

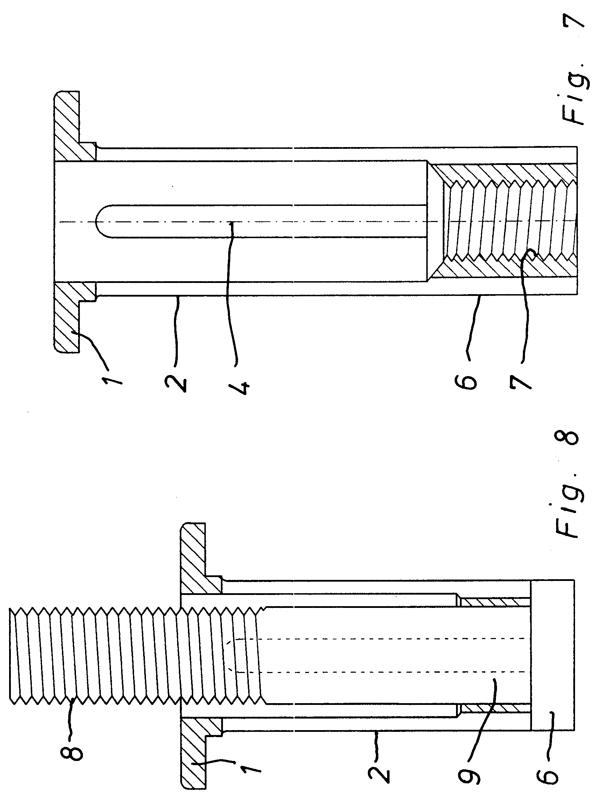

Wie die Fig. 7 zeigt, ist im unteren Halteteil 6 ein Innengewinde 7 eingebracht, so daß die Stauchhülse als Blindnietmutter Verwendung finden kann. Bei der Ausführungsform nach Fig. 8 ist in dem unteren Halteteil 6 eine den Kopf nach oben ragende Schraube 8 mit ihrem Schaft 9 in bekannter Weise befestigt, so daß diese Stauchülse als Blindnietschraube Verwendung finden kann.

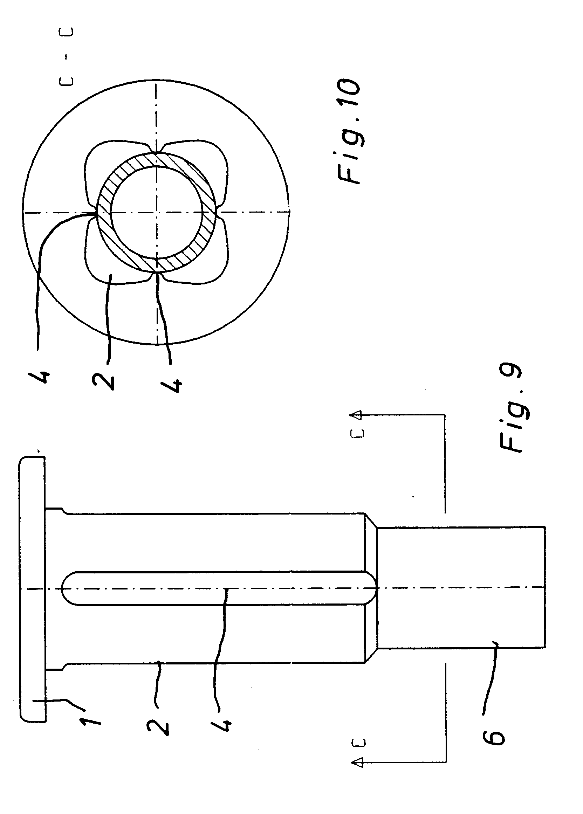

Wie die Fig. 9 und 10 zeigen, hat bei dieser Ausführungsform die Stauchhülse einen unteren Halteteil 6 mit einem kleineren Durchmesser als der Nutboden der nutartigen Rillen 4, so daß beim Fließpressen im Halteteil 6 keine Rillen eingepreßt werden.

## Patentansprüche

1. Verfahren zur Herstellung einer Stauchhülse mit einem oberen Kopf, einem mittleren, geschlitzten Stauchteil und einem unteren Halteteil, dadurch gekennzeichnet, daß in einen Rohling mit einem Kopf (1) und einem sich daran anschließenden Schaft (2) von unten eine zentrale Ausnehmung (3) kürzerer Länge als der Schaft fließgepreßt wird, daß dann durch weiteres Aufpreßen der zentralen Ausnehmung in die Schaftaußenseite in Schaftlängsrichtung im Abstand zueinander verlaufende, sich über die Länge des Schaftes erstreckende nutartige Rillen (4) fließgepreßt werden und daß anschließend in den so verformten Rohling vom Kopf (1) bis zum unteren Halteteil (6) eine Ausnehmung in einem die nutartigen Rillen im mittleren Stauchteil freischneidenden Durchmesser eingebracht wird.

2. Verfahren nach Anspruch 1, dadurch gekennzeichnet, daß das Einbringen der zentralen Ausnehmung (3) und das Aufpressen mit dem Fließpressen der nutartigen Rillen (4) in einem Arbeitsschritt erfolgt.

3. Verfahren nach Anspruch 1 oder 2, dadurch gekennzeichnet, daß der Schaft des Rohlings etwa in einen rechteckigen, quadratischen oder dreieckigen Querschnitt fließgepreßt wird.

4. Verfahren nach einem der Ansprüche 1 bis 3, dadurch gekennzeichnet, daß in den unteren Halteteil (6) ein Innengewinde (7) eingebracht wird.

5. Verfahren nach einem der Ansprüche 1 bis 3, dadurch gekennzeichnet, daß in dem unteren Halteteil (6) der Schaft (9) einer den Kopf (1) nach oben überragenden Schraube (8) in bekannter Weise befestigt wird.

6. Verfahren nach einem der Ansprüche 1 bis 5, dadurch gekennzeichnet, daß das untere Halteteil (6) einen Außendurchmesser hat, der kleiner als der durch den Nutboden der Rillen (4) bestimmte Durchmesser ist.

## Claims

1. Process for manufacturing a ram sleeve comprising an upper head, a middle slotted ram portion and a lower holding portion, **characterised in that** into a blank comprising a head (1) and a thereto adjacent shaft (2) is flow-pressed from below a central cutout (3) of shorter length than that of the shaft, and thereafter groovelike notches (4) are flow-pressed, which due to further pressuring of the central cutout into the shaft exterior extend in the direction of the shaft's longitudinal direction at a distance from each other over the length of the shaft; thereafter, into a thus preshaped blank is entered from the head (1) to the lower holding portion (6) a cutout at a diameter which cuts free the groovelike notches in the middle ram portion.

2. Process according to Claim 1, **characterised in that** entering the central cutout (3) and pressuring by flow-pressing the groovelike notches (4) is performed in one working process.

3. Process according to Claim 1 or 2, **characterised in that** the shaft of the blank is flow-pressed into a rectangular, square or triangular cross-section.

4. Process according to one of Claims 1 to 3, **characterised in that** an internal thread (7) is produced in the lower holding portion (6).

5. Process according to one of Claims 1 to 3, **characterised in that** in the lower holding portion (6) is conventionally mounted the shaft (9) of a bolt (8) which upwardly protrudes over the head (1).

6. Process according to one of Claims 1 to 5, **characterised in that** the lower holding portion (6) has an outside diameter which is smaller than the diameter set by the groove base of the notches (4).

## Revendications

1. Procédé de fabrication d'une douille à refoulement comportant une tête supérieure, une partie médiane fendue de refoulement et une partie inférieure de retenue, caractérisé en ce que dans une ébauche comportant une tête (1) et une tige (2) se raccordant à cette tête, on aménage par formage par fluage, à partir du bas, un évidement central (3) d'une longueur inférieure à celle de la tige, qu'ensuite, au moyen d'une compression supplémentaire appliquée à l'évidement central formé dans la face extérieure de la tige, on forme par fluage des encoches (4) en forme de rainures, qui sont parallèles à la direction longitudinale de la tige et s'étendent sur la longueur de cette dernière, et qu'ensuite on aménage, dans l'ébauche ainsi formée, depuis la tête (1) jusqu'à la partie inférieure de retenue (6), un évidement ayant un diamètre tel qu'il ouvre les encoches en forme de rainures dans la partie médiane de refoulement.

2. Procédé selon la revendication 1, caractérisé en ce que l'aménagement de l'évidement central (3) et la compression avec formage par fluage des encoches en forme de rainures (4) sont exécutés en une étape opératoire.

3. Procédé selon la revendication 1 ou 2, caractérisé en ce que la tige de l'ébauche est formée par fluage par exemple avec une section transversale rectangulaire, carrée ou triangulaire.

4. Procédé selon l'une des revendications 1 à 3, caractérisé en ce qu'on forme un taraudage (7) dans la partie inférieure de retenue (6).

5. Procédé selon l'une des revendications 1 à 3, caractérisé en ce qu'on fixe, de façon connue, dans la partie inférieure de retenue (6) de la tige (9), une vis (8) qui fait saillie vers le haut au-dessus de la tête (1).

6. Procédé selon l'une des revendications 1 à 5, caractérisé en ce que la partie inférieure de retenue (6) possède un diamètre extérieur qui est inférieur au diamètre déterminé par le fond des encoches (4).
